# EUROPEAN PATENT APPLICATION

(11) **EP 3 598 589 A1**
(43) Date of publication of application: **22.01.2020**
(21) Application number: 18766978.3
(22) Date of filing: 15.03.2018
(51) Int. Cl.: H01R 39/38, H02K 5/14

(54) **VEHICLE GENERATOR BRUSH HOLDER AND REGULATOR COMPRISING SAME**

(30) Priority: 16.03.2017 KR 20170001251 U
(71) Applicant: Valeo Electrical Systems Korea Ltd., Gyeongju-si, Gyeongsangbuk-do 38071 (KR)
(72) Inventor: LEE, Byung-Jin, Daegu 42038 (KR); KIM, Tae-Woo, Gyeongju-si Gyeongsangbuk-do 38059 (KR); SON, San-Ho, Gyeongju-si Gyeongsangbuk-do 38068 (KR)
(74) Representative: Ricard, Amandine
(86) International application number: PCT/KR2018/003057
(87) International publication number: WO 2018/169329

(57) **Abstract**

A vehicle generator brush holder is disclosed. According to an aspect of the present invention, a vehicle generator brush holder which supports a brush that supplies electricity to the rotor of a vehicle generator may be provided, wherein the brush holder comprises a brush holder terminal which is connected to a circuit; and a wire accommodation part which is formed in the brush holder terminal and accommodates wires connected to the brush, and the brush holder terminal and the wire accommodation part are integrally formed.

## Description

### TECHNICAL FIELD

The present invention relates to a vehicle generator brush holder and regulator comprising same, and more specifically to a vehicle generator brush holder in which a brush for supplying electricity to the rotor of a vehicle generator can be easily installed, and to a regulator comprising same.

### BACKGROUND ART

Generally, generators for converting the mechanical energy of an automobile engine into electrical energy are installed in a vehicle.

In such a generator, a regulator for maintaining the voltage generated by the generator in a fixed range is also installed.

The regulator comprises a brush for supplying electricity to the generator rotor and a brush holder supporting the brush and is connected to the brush holder via a wire.

But since conventional wires are connected to the brush holder using a connection member such as a grommet in order to maintain air-tightness and prevent the wires from becoming separated, there is the problem that the number of components during manufacture of a regulator increase so the overall assembly process of the regulator is more complicated.

### DETAILED DESCRIPTION OF THE INVENTION

### TECHNICAL PROBLEM

The object of the embodiments of the present invention is to provide a vehicle generator brush holder in which a brush can be easily installed and a regulator comprising same.

### MEANS OF SOLVING THE PROBLEM

According to an aspect of the present invention, a vehicle generator brush holder which supports a brush that supplies electricity to the rotor of a vehicle generator may be provided, wherein the brush holder comprises a brush holder terminal which is connected to a circuit; and a wire accommodation part which is formed in the brush holder terminal and accommodates wires connected to the brush, and the brush holder terminal and the wire accommodation part are integrally formed.

A spring support part which is formed in the brush holder terminal and supports a spring connected to the brush is included, while the wire accommodation part is formed passing through the spring support part and may have a tubular shape having a fixed height so as to be able to compress and fix the wires.

According to an aspect of the present invention, a regulator comprising the brush holder for a vehicle generator may be provided.

### ADVANTAGES OF THE INVENTION

The brush holder according to an embodiment of the present invention may reduce the overall number of components of a regulator since the brush holder terminal and wire accommodation part are integrally formed, while by removing the process of inserting a connection member such as a grommet the product costs may be reduced.

### BRIEF DESCRIPTION OF THE DRAWINGS

Figure 1 is a drawing illustrating a regulator according to an embodiment of the present invention which is attached to a vehicle generator.
Figure 2 is a drawing illustrating and projecting the insides of a regulator according to an embodiment of the present invention.
Figure 3 is a drawing illustrating the inside of a regulator according to an embodiment of the present invention.
Figure 4 is a drawing illustrating the brush holder according to an embodiment of the present invention.

### BEST MODE FOR IMPLEMENTING THE INVENTION

Hereinbelow, the embodiments of the present invention are described in detail with reference to the accompanying drawings. The embodiments below are described in order to sufficiently convey the concept of the present invention to a person skilled in the art to which the present invention belongs. The present invention is not limited to only the embodiments described herein and may be realized in other forms. The drawings omit depictions of portions that are not related to the description in order to make the present invention clear, and to facilitate understanding the sizes of the constituent elements may be shown to be slightly exaggerated.

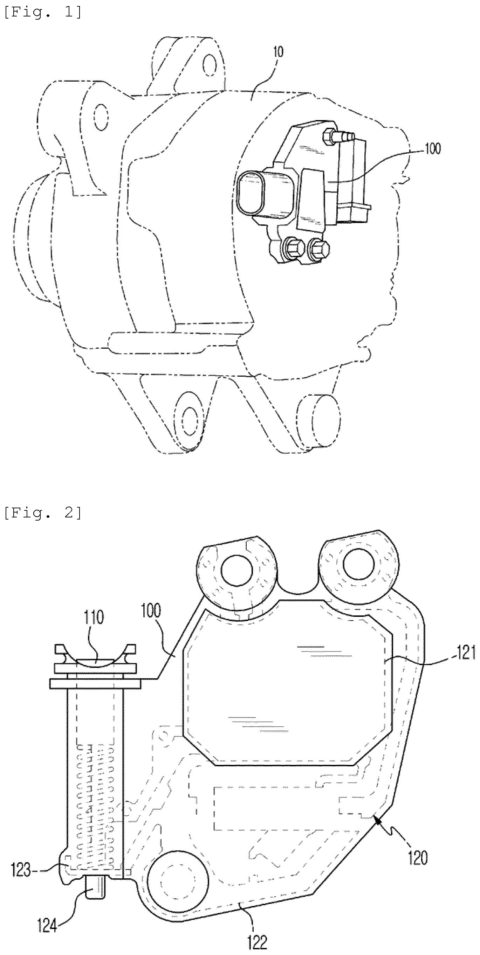

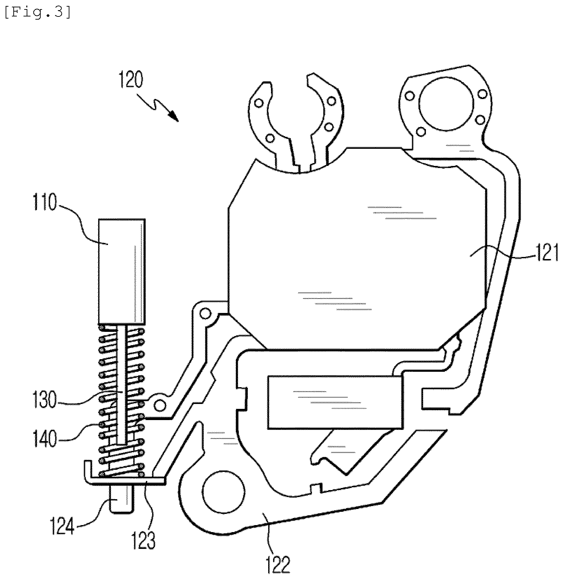

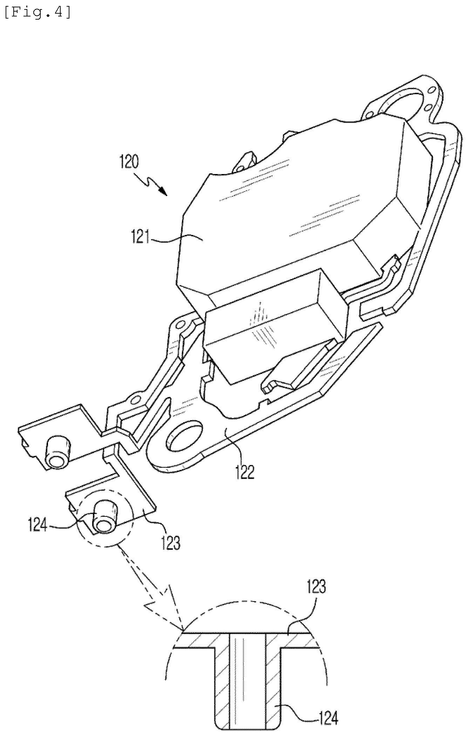

As shown in figures 1 to 4, a regulator (100) based on an embodiment of the present invention is installed on a generator for a vehicle (10) and controls the voltage generated by the generator for a vehicle (10).

The regulator (100) comprises a brush (110), a brush holder (120), a wire (130), and a spring (140).

The brush (110) supplies electricity to the rotor of the generator for a vehicle (10).

A plurality of brushes (110) are installed in a brush holder (120) and may supply electricity to the rotor of the generator for a vehicle (10).

Brushes (110) are coupled to the brush holder (120) via the wire (130) and spring (140).

Brushes (110) may be electrically connected to the brush holder (120) via the wire (130).

The brush holder (120) supports the brushes (110).

The brush holder (120) may comprise a control unit (121), a brush holder terminal (122), a spring support part (123) and wire accommodation part (124).

The control unit (121) is installed in the brush holder terminal (122) and controls the voltage generated in the generator for a vehicle (10).

The control unit (121) may be installed in the brush holder terminal (122) together with various kinds of circuit and controls the voltage generated in the generator for a vehicle (10).

The control unit (121) may be constituted as an electronic chip.

The brush holder terminal (122) is connected to the control unit (121) and various kinds of circuit while supporting the brush (110).

The brush holder terminal (122) may be electrically connected to the control unit (121) and various kinds of circuit.

The brush holder terminal (122) may be integrally formed with the spring support part (123) and the wire accommodation part (124) to support the brush (110).

The brush holder terminal (122) may be electrically connected to the wire (130).

The brush holder terminal (122) may be electrically connected to the brush (110) through the wire (130) at the same time as supporting the brush (110).

The spring support part (123) is formed on the brush holder terminal (122) to support the spring (140) connected to the brush (110).

A plurality of spring support parts (123) may be formed on the end of the brush holder terminal (122) to support the spring (140).

A hole may be formed on the spring support part (123) so as to allow a wire (130) to pass therethrough.

The wire accommodation part (124) is formed in the brush holder terminal (122) to accommodate the wire (130) connected to the brush (110).

The wire accommodation part (124) is formed piercing through the spring support part (123).

The wire accommodation part (124) may be constituted in a tubular shape having a fixed height so as to be able to compress and fix the wire (130).

The wire accommodation part (124) may be integrally formed with the brush holder terminal (122).

The wire accommodation part (124) may be constituted as a plurality.

One side of the wire (130) is connected to the brush (110), while the other side is accommodated in the wire accommodation part (124).

After the wire (130) has been accommodated in the wire accommodation part (124), the wire accommodation part (124) may be compressed and fixed.

After the wire accommodation unit (124) has been compressed, the wire (130) may be electrically connected to the various kinds of circuit through soldering.

The spring (140) elastically supports the brush (110) .

The spring (140) is installed on the spring support part (123) to be able to elastically support the brush (110) .

The spring (140) may be installed surrounding the outside of the wire (130) so as to allow the wire (130) to pass through the inside of the spring (140) and be accommodated in the wire accommodation part (124).

The present invention has been described as above by means of the delimited embodiments and drawings, however the present invention is not limited thereby and it is naturally possible for various amendments and modifications within an equivalent range to the scope of the claims, which disclose the technical concept of the present invention below, to be made by a person skilled in the art to which the present invention belongs.

## Claims

1. A vehicle generator brush holder which supports a brush that supplies electricity to a rotor of a generator of a vehicle, the brush holder comprising:
a brush holder terminal which is connected to circuit; and
a wire accommodation part which is formed on the brush holder terminal and accommodates a wire which is connected to a brush,
wherein the brush holder terminal and the wire accommodation part are integrally formed.

2. The vehicle generator brush holder as claimed in claim 1, the brush holder comprising:
a spring support part which is formed on the brush holder terminal and supports a spring which is connected to the brush,
wherein the wire accommodation part is formed piercing through the spring support part and is constituted by a tubular shape having a fixed height so as to be able to compress and fix the wire.

3. A vehicle generator regulator comprising the brush holder as claimed in claim 1 or claim 2.
